# FASCICULE DE BREVET EUROPEEN

(11) **EP 0 505 650 B1**
(45) Date de publication et mention de la délivrance du brevet: **27.04.1994**
(21) Numéro de dépôt: 91440049.4
(22) Date de dépôt: 11.06.1991
(51) Int. Cl.: C09D 157/00, C09D 5/02, C08J 9/35

(54) **Revêtement décoratif pour murs et plafonds à base de billes de polystyrène expansé**
Dekorative Beschichtung für Wände und Decken auf der Basis von expandiertem Polystyrol
Decorative coating for walls and ceilings based on expanded polystyrene

(30) Priorité: 26.03.1991 FR 9103829
(43) Date de publication de la demande: 30.09.1992
(73) Titulaire: STYRODECOR EURL, F-83500 La Seyne sur Mer (FR)
(72) Inventeur: Maurel, Jacques, F-83400 Hyères (FR)

(56) Documents cités:
- GB-A- 2 123 034
- WORLD PATENTS INDEX LATEST Derwent Publications Ltd., London, GB; AN 83-751067

## Description

La présente invention a pour objet le produit industriel nouveau que constitue un revêtement décoratif pour murs et plafonds à base de billes de polystyrène expansé, présentant de hautes qualités d'isolation thermique et d'absorption acoustique, ainsi que des propriétés d'anti-condensation.

Le produit selon l'invention se caractérise essentiellement en ce qu'il renferme des billes de polystyrène expansé dans un liant constitué d'une dispersion en phase aqueuse d'au moins un polymère vinylique, et en ce qu'il renferme en outre une certaine quantité de vermiculite exfoliée.

Les billes de polystyrène mises en oeuvre dans le produit selon l'invention sont avantageusement des billes de polystyrène ignifugé de diamètre compris entre 1 et 3 mm, et elles entrent dans la composition du produit selon l'invention à raison de 10 à 12 % en poids.

La vermiculite exfoliée confère au produit selon l'invention des propriétés d'anti-condensation. Elle est avantageusement mise en oeuvre à raison de 7 à 10 % en poids.

Le polymère vinylique mis en oeuvre dans le produit selon l'invention peut être n'importe quel homopolymère ou copolymère vinylique, tel qu'un chlorure de polyvinyle, un polyacétate de vinyle, un acétate versatate de vinyle, un styrène ester acrylique, un polymère styrène-butadiène, un vinyle éthylène chlorure, cette énumération n'étant pas limitative. Ledit polymère est incorporé dans le produit selon l'invention sous forme d'une dispersion aqueuse, dans laquelle il est mis en oeuvre à raison de 48 à 52 % en poids, ladite dispersion aqueuse étant elle-même mise en oeuvre à raison de 30 à 35 % en poids du produit final, qui renferme additionnellement 20 à 30 % en poids d'eau.

Le produit selon l'invention peut renfermer en outre divers additifs tels que des pigments, des agents ignifuges, des agents de coalescence, des fongicides, et des épaississants.

Les pigments peuvent être incorporés dans le produit selon l'invention à raison de 2 à 5 % en poids. A titre d'exemple de pigments utilisables on peut citer le dioxyde de titane, l'oxyde de fer jaune, rouge ou noir et les colorants universels mis en oeuvre dans ce type d'application pour obtenir des teintes vives.

Les agents ignifuges peuvent être incorporés dans le produit selon l'invention à raison de 3 à 5 % en poids. A titre d'exemple d'agents ignifuges utilisables on peut citer l'oxyde d'antimoine, la paraffine chlorée ou les composés halogénés connus pour ce type d'application.

Les agents de coalescence peuvent être mis en oeuvre dans le produit selon l'invention à raison de 0,5 à 2 % en poids. A titre d'exemple de tels agents on peut citer le white spirit, l'hexylène glycol, l'acétate de butyl carbitol ainsi que les produits commercialisés sous les marques TEXANOL et DOWANOL par les firmes américaines TEXACO et DOW CHEMICAL.

Les fongicides peuvent être mis en oeuvre dans le procédé selon l'invention à raison de 0,3 à 0,7 % en poids. A titre d'exemple de fongicides utilisables on peut citer les dérivés phénoliques, mercuriels et stanniques, ainsi que les thiazolines.

Enfin les épaississants peuvent être mis en oeuvre dans le procédé selon l'invention à raison de 0,05 à 0,3 % en poids. A titre d'exemple d'épaississants utilisables on peut citer les éthers de cellulose, les émulsions acryliques et les polyuréthannes hydrosolubles.

Le produit selon l'invention se prépare aisément par introduction, dans la quantité d'eau choisie, d'un polymère vinylique ou d'un mélange de polymères vinyliques, sous agitation vive, de manière à former la suspension. Les additifs choisis sont ensuite ajoutés, toujours sous agitation, puis l'ensemble est déversé sur les billes de polystyrène expansé et mélangé soigneusement pendant 30 à 45 minutes avant d'être conditionné dans des récipients hermétiquement fermes.

Le produit selon l'invention, destiné à être appliqué par projection mécanique sur les murs et les plafonds, sèche par évaporation de l'eau qu'il renferme, la quantité d'eau à évaporer étant d'environ 50 % du poids du produit. Son séchage, qui doit être réalisé à une température supérieure à 10 °C, nécessite de 48 à 72 heures, selon les conditions ambiantes.

L'application du produit selon l'invention s'effectue à l'aide d'un dispositif approprié et soit en continu, par exemple avec une machine à vis sans fin de type connu, soit en discontinu avec une machine incluant un compresseur, un réservoir et un tuyau d'air, la pression en sortie de buse devant être préférentiellement réglée à 3 à 4 bars.

Lors de l'application, la distance de projection est de préférence comprise entre 70 cm et 1 m, et elle s'effectue de préférence par mouvements circulaires sur l'ensemble de la surface à traiter.

Le produit selon l'invention s'applique préférentiellement en une seule couche dont l'épaisseur approximative est de 1,5 cm, et dont la couleur est fonction des pigments qu'il renferme.

Du fait de sa composition, le produit selon l'invention constitue un excellent isolant thermique, la combinaison du polystyrène et de la vermiculite lui conférant des qualités d'isolation thermique en faible épaisseur.

D'autre part le produit selon l'invention confère aux locaux où il est appliqué une correction acoustique due à son état de surface irrégulier, qui absorbe le bruit.

Enfin le produit selon l'invention du fait de ses qualités d'isolation thermique, permet d'abaisser le point de rosée des locaux où il est appliqué, jouant de ce fait le rôle de régulateur hygrothermique, et d'autre part, du fait des propriétés absorbantes de la vermiculite, il permet d'éviter les phénomènes de condensation.

Le produit selon l'invention peut être appliqué sur n'importe quelle surface propre, qu'elle soit métallique, en bois, en plâtre, en béton, ou autre matériau.

L'exemple qui suit est fourni à titre d'illustration de la présente invention, étant bien entendu qu'il ne présente vis-à-vis d'elle aucun caractère limitatif.

### EXEMPLE

Dans un malaxeur de 5000 l à axe longitudinal tournant a 15 tours/mn on introduit 4800 l de billes de polystyrène expansé.

D'autre part, dans un mélangeur comportant un rotor à vitesse variable, on prépare une pâte-mère en introduisant dans 150 litres d'eau, sous agitation vive (environ 600t/mn), 275 kg d'une dispersion de résine styrène ester acrylique à 50% d'extrait sec vendue sous la dénomination "DILEXO AS 2 K" par la firme américaine TEXACO Inc.

On y introduit ensuite, en maintenant l'agitation, les additifs suivants :
- 25 kg de paraffine chlorée à 70 % de chlore vendue sous la dénomination "CERECLOR 70P" par la firme allemande HOECHST A.G.
- 10 kg de trioxyde d'antimoine.
- 2 kg d'acétate de butyl carbitol.
- 4 kg d'hexylène glycol.
- 5 kg d'isothiazolinone-3 vendue sous la dénomination "SKANE M 8" par la firme américaine ROHM & HAAS.
- 70 kg de vermiculite SF.
- 20 kg de titane CR821.

Dans une autre cuve, on disperse dans 50 litres d'eau 1,8 kg d'éther de cellulose vendu sous la dénomination "METHOCEL J12HS" par la firme américaine DOW CHEMICAL et on introduit cette suspension dans le mélangeur immédiatement avant le tranfert de l'ensemble vers le malaxeur contenant les billes de polystyrène, transfert opéré à l'aide d'une pompe. On rince alors le mélangeur avec 100 litres d'eau que l'on transvase également dans le malaxeur.

Après malaxage pendant environ 45 minutes, le produit est conditionné dans des récipients que l'on ferme hermétiquement.

## Revendications

1. Composition pour revêtement de murs et plafonds, caractérisée en ce qu'elle renferme 10 à 12 % en poids de billes de polystyrène expansé et 7 à 10 % en poids de vermiculite exfoliée dans un liant constitué d'une dispersion aqueuse d'au moins un polymère vinylique.

2. Composition selon la revendication 1, caractérisé en ce que la dispersion aqueuse renferme de 48 à 52 % d'au moins un polymère, ladite dispersion étant mise en oeuvre à raison de 30 à 35 % en poids de la composition, qui renferme additionnellement 20 à 30 % en poids d'eau.

3. Composition selon la revendication 1 ou la revendication 2, caractérisée en ce que le polymère vinylique est choisi dans le groupe formé par les chlorures de polyvinyle, les acétates versatates de vinyle, les styrène esters acryliques, les vinyle éthylène chlorures et les polymères styrène-butadiène.

4. Composition selon l'une quelconque des revendications précédentes, caractérisée en ce qu'elle renferme en outre au moins un additif choisi dans le groupe formé par les pigments, les agents ignifuges, les agents de coalescence, les fongicides et les épaississants.

5. Composition selon l'une quelconque des revendications précédentes, caractérisée en ce qu'elle renferme 2 à 5 % en poids d'au moins un pigment, 3 à 5 % en poids d'au moins un agent ignifuge, 0,5 à 2 % en poids d'au moins un agent de coalescence, 0,3 à 0,7 % en poids d'au moins un fongicide et 0,05 à 0,3 % en poids d'au moins un épaississant.

6. Composition selon la revendication 4 ou la revendication 5, caractérisée en ce que les pigments sont choisis dans le groupe formé par les oxydes de titane, les oxydes de fer jaune, rouge et noir et les colorants universels.

7. Composition selon la revendication 4 ou la revendication 5, caractérisée en ce que les agents ignifuges sont choisis dans le groupe formé par l'oxyde d'antimoine, la paraffine chlorée et les composés halogénés.

8. Composition selon la revendication 4 ou la revendication 5, caractérisée en ce que les agents de coalescence sont choisis dans le groupe formé par le white spirit, l'hexylène glycol et l'acétate de butyl carbitol.

9. Composition selon la revendication 4 ou la revendication 5, caractérisée en ce que les fongicides sont choisis dans le groupe formé par les dérivés phénoliques, mercuriels et stanniques, et les thiazolines.

10. Composition selon la revendication 4 ou la revendication 5, caractérisée en ce que les épaississants sont choisis dans le groupe formé par les éthers de cellulose, les émulsions acryliques et les polyuréthannes hydrosolubles.

## Patentansprüche

1. Mischung zur Beschichtung von Wänden und Decken, **gekennzeichnet durch** einen Gehalt von 10 bis 12 Gew.-% an Kügelchen aus expandiertem Polystyrol und 7 bis 10 Gew.-% an abgeschiefertem Vermiculit in einem Bindemittel, welches aus einer wässrigen Dispersion mit mindestens einem Vinylpolymer besteht.

2. Mischung nach Anspruch 1, **dadurch gekennzeichnet,** daß die wässrige Dispersion einen Gehalt von 48 bis 52 Gew.-% eines Polymers aufweist und die Mischung zu 30 bis 35 Gew.-% aus dieser Dispersion besteht sowie zusätzlich 20 bis 30 Gew.-% Wasser aufweist.

3. Mischung nach einem der Ansprüche 1 oder 2, **dadurch gekennzeichnet,** daß das Vinylpolymer ausgewählt ist aus der Gruppe der chlorierten Polyvinyle, der Vinylacetate, der Acrylstyrolester, der chlorierten Vinyläthylene und der Styrolbutadienpolymere.

4. Mischung nach einem der voranstehenden Ansprüche, **dadurch gekennzeich****net,** daß sie zusätzlich ein Additiv aufweist, welches ausgewählt ist aus der Gruppe der Pigmente, der flammhemmenden Substanzen, der Bindemittel, der Fungizide und der Verdickungsmittel.

5. Mischung nach einem der voranstehenden Ansprüche, **dadurch gekennzeich****net,** daß sie einen Gehalt von 2 bis 5 Gew.- % mindestens eines Pigments, 3 bis 5 Gew.-% mindestens einer flammhemmenden Substanz, 0,5 bis 2 Gew.-% mindestens eines Bindemittels, 0,3 bis 0,7 Gew.-% mindestens eines Fungizids und 0,05 bis 0,3 Gew.-% mindestens eines Verdickungsmittels aufweist.

6. Mischung nach einem der Ansprüche 4 oder 5, **dadurch gekennzeichnet,** daß die Pigmente ausgewählt sind aus der Gruppe der Titanoxide, der gelben, roten und schwarzen Eisenoxide und der Universalfarbstoffe.

7. Mischung nach einem der Ansprüche 4 oder 5, **dadurch gekennzeichnet,** daß die flammhemmenden Substanzen ausgewählt sind aus der Gruppe der Antimonoxide, chlorierten Paraffine und halogenierten Substanzen.

8. Mischung nach einem der Ansprüche 4 oder 5, **dadurch gekennzeichnet,** daß die Bindemittel ausgewählt sind aus der durch Alkohol, Hexylenglycol und Butylcarbitolacetat gebildeten Gruppe.

9. Mischung nach einem der Ansprüche 4 oder 5, **dadurch gekennzeichnet,** daß die Fungizide ausgewählt sind aus der Gruppe der Phenol-, Quecksilber- und Stannitderivate und der Thiazoline.

10. Mischung nach einem der Ansprüche 4 oder 5, **dadurch gekennzeichnet,** daß die Verdickungsmittel ausgewählt sind aus der Gruppe der Celluloseäther, Acrylemulsionen und wasserlöslichen Polyurethane.

## Claims

1. Composition for coating for walls and ceilings characterised in that it contains 10-12% by weight of expanded polystyrene and 7-10% of an exfoliated vermiculite in a binder comprised of an aqueous dispersion of at least a vinyl polymer.

2. Composition according to claim 1 characterised in that the aqueous dispersion comprises 48-52% of at least a polymer, which dispersion being implemented with 30-35% by weight of the composition, which comprises additionally 20-30% by weight of water.

3. Composition according to claim 1 or claim 2 characterised in that the vinyl polymer is chosen from the group of polyvinyl chlorides, the versatate vinyl acetates, the acrylic styrene esters, the vinyl ethylene chlorides and the styrene-butadiene polymers.

4. Composition according to any one of the preceding claims characterised in that it contains furthermore at least an additive chosen from the group formed by pigments, fire proofing agents, coalescing agents, fungicides and thickeners.

5. Composition according to any one of the preceding claims characterised in that it contains 2-5% by weight of at least a pigment, 3-5% by weight of at least a fire proofing agent, 0.5-2% by weight of at least a coalescing agent, 0.3-0.7% by weight of at least a fungicide and 0.05-0.3% by weight of at least a thickener.

6. Composition according to claim 4 or claim 5 characterised in that the pigments are chosen from the group formed by the titanium oxides, the yellow, red and black iron oxides and the universal colorants.

7. Composition according to claim 4 or claim 5 characterised in that the fire proofing agents are chosen from the group formed by antimony oxide, chlorinated paraffin and the halogen compounds.

8. Composition according to claim 4 or claim 5 characterised in that the coalescing agents are chosen from the group formed by white spirit, hexylene glycol and butyl carbitol acetate.

9. Composition according to claim 4 or claim 5 characterised in that the fungicides are chosen from the group formed by the phenolic, mercurial and stannic derivatives and the thiazolines.

10. Composition according to claim 4 or claim 5 characterised in that the thickeners are chosen from the group formed by the cellulose ethers, the acrylic emulsions and the water soluble polyurethanes.
